# FASCICULE DE BREVET EUROPEEN

(11) **EP 2 530 014 B1**
(45) Date de publication et mention de la délivrance du brevet: **11.03.2015**
(21) Numéro de dépôt: 12169923.5
(22) Date de dépôt: 30.05.2012
(51) Int. Cl.: B64D 11/06, B60N 2/01, B60N 2/34

(54) **Siège convertible en couchette**
In Schlafkoje umwandelbarer Sitz
Seat that can convert into a bed

(30) Priorité: 01.06.2011 FR 1154841
(43) Date de publication de la demande: 05.12.2012
(73) Titulaire: EADS Sogerma, 17300 Rochefort (FR)
(72) Inventeur: Vergnaud, Franck, 17220 Saint Medard d'Aunis (FR); Guinot, Didier, 17000 La Rochelle (FR); Martin, Gabriel, 17620 Echillais (FR)
(74) Mandataire: Maupilier, Didier

(56) Documents cités:
- WO-A2-2009/120308
- GB-A- 2 405 791
- US-A1- 2009 066 121

## Description

La présente invention appartient au domaine des aménagements des cabines de moyens de transport de passagers.

Plus particulièrement l'invention concerne un siège convertible en couchette particulièrement adapté aux besoins de cabines pour passagers, par exemple de cabines d'aéronefs.

Dans le domaine du transport de personnes il est connu de proposer aux passagers devant effectuer un voyage relativement long un siège pouvant être converti pendant la durée du voyage pour offrir au choix du passager une position assise ou une position de détente, position de détente qui peut correspondre à la position allongée.

Un tel siège est décrit dans la document D1 GB2405791.

Un fauteuil convertible en couchette s'avère une solution particulièrement avantageuse lorsque la durée du voyage rend celui-ci relativement pénible pour rester en position assise pendant tout le voyage et que cette durée reste cependant suffisamment réduite pour ne pas justifier de cabines individuelles.

Ce type de situation se trouve par exemple dans le cas des avions long courrier pour lesquels un voyage ne comporte qu'une période de sommeil et pour lesquels la place disponible est souvent très limitée.

C'est également le cas pour certains voyages utilisant le train, l'autocar, ou encore le bateau suivant la durée du voyage.

II est connu de réaliser des fauteuils pour lesquels un mouvement conjugué de l'assise, du dossier et d'un repose jambes positionnant ces différentes parties du fauteuil sensiblement à l'horizontale dans un même plan permet de former un couchage, le cas échéant prolongé par une banquette fixe à la même hauteur que le plan de couchage.

De tels fauteuils, convertibles en couchage à plat, offre le confort recherché mais ils imposent, lorsqu'ils sont installés en nombre dans une cabine de passagers, une distance suivant le sens longitudinal entre les sièges, le pas des sièges dans la cabine, au moins égal à la longueur de la couchette obtenue, et le plus souvent une distance supérieure lorsqu'un occupant d'un siège mitoyen d'un autre siège doit accéder à un couloir qui n'est pas de son côté.

Ce type de confort, très exigeant en place est donc réservé à des cabines de luxe et implique de limiter le nombre de sièges pouvant être installés dans une longueur de cabine donnée.

Pour augmenter le nombre de sièges dans une cabine en diminuant la distance entre sièges, il est également connu de limiter les mouvements des parties du siège pour amener le siège dans une position moyenne horizontale ou très inclinée mais en maintenant des angles entre les différentes parties, assise et dossier d'une part et assise et repose jambe d'autre part, pour aboutir à un profil en Z couché.

Le gain sur la longueur du siège dans cette position dite « position relax » autorise un agencement de cabine avec un pas des sièges diminué par rapport à la solution d'un couchage à plat mais le confort est moindre et ne satisfait généralement pas les passagers des classes supérieures.

Une autre solution connue pour diminuer le pas entre les sièges dans le cas d'un couchage à plat ou d'une position relax consiste à disposer d'un espace sous le siège devant un autre siège dans lequel l'occupant du siège arrière positionne ses pieds.

Cette solution s'avère cependant pénalisante en confort car elle ne permet pas de relever suffisamment les pieds et dans le cas d'un couchage à plat impose que le couchage ne soit pas horizontal mais incliné sensiblement par rapport à l'horizontal.

La compétition très forte dans le domaine du transport rend ainsi délicat le compromis entre une cabine offrant des sièges avec un couchage à plat intégral et horizontal, commercialement très attractive, et une cabine comportant plus de sièges n'offrant pas un tel couchage à plat, donc économiquement plus rentable mais commercialement moins attractive.

La présente invention concerne un aménagement de cabine pour le transport de passagers dans lequel les sièges sont convertibles en couchage à plat et dans lequel le pas des sièges est sensiblement inférieur à la longueur du couchage, par exemple équivalent à celui qui serait nécessaire pour des sièges comportant une position relax.

Un tel résultat est obtenu en mettant en oeuvre les sièges de l'invention qui sont agencés par bloc de deux sièges.

Dans un bloc de deux sièges de l'invention, chaque siège est convertible individuellement, par un mouvement relatif d'éléments du siège, entre une configuration fauteuil, dans laquelle un occupant du siège est dans une position assise, et une configuration couchage, dans laquelle les éléments du siège sont placés pour former un plan de couchage, dans laquelle un occupant du siège est étendu sensiblement à plat et sensiblement horizontalement.

Les deux sièges d'un bloc sont agencés côte à côte et orientés sensiblement dans un même sens, et :
- l'axe longitudinal de chacun des sièges, lorsque les sièges sont en configuration couchage, converge vers un point de convergence situé dans un plan vertical de symétrie du bloc en arrière des sièges de telle sorte que les axes longitudinaux des deux sièges du bloc se trouvent rapprochés au niveau de la zone tête dans laquelle zone les parties supérieures des dossiers et les appuis-tête des deux sièges sont superposés, au moins partiellement, dans une projection verticale, par exemple en vue de dessus ;
- lorsque les deux sièges sont en configuration couchage, les plans de couchage des deux sièges sont à des hauteurs différentes par rapport au plancher d'une cabine dans laquelle le bloc serait installé.

Ainsi il est obtenu une superposition partielle des sièges en configuration couchage qui est possible sans gêne pour les occupants des couchages en raison du décalage en hauteur, cette superposition permettant d'obtenir dans la zone de superposition partielle une diminution de la largeur nécessaire aux couchages.

Du fait de diminution de largeur dans la zone tête, le bloc de deux sièges comporte dans sa partie arrière de chaque côté de la zone tête une colonne latérale dans laquelle est agencée une zone pieds qui se trouverait sensiblement dans l'axe longitudinal d'un siège, situé du même côté que la zone pied considérée, mais d'un bloc placé derrière le bloc considéré à une distance de séparation, le pas **X** des blocs dans un aménagement, inférieure à une longueur désirée **L0** du couchage du bloc similaire en arrière. Ainsi l'espace correspondant à ces colonnes latérales, rendu possible par la convergence des sièges en configuration couchage au niveau de la zone tête, permet de créer un espace pour prolonger le couchage du bloc situé en arrière de la longueur voulue.

Considérant comme hauteur de référence au-dessus du plancher la hauteur de l'assise des sièges en configuration fauteuil, le décalage en hauteur des deux plans de couchage des sièges d'un bloc est obtenu par un des plans de couchage dans la configuration couchage au-dessus de l'assise en configuration fauteuil ou par un des plans de couchage en dessous de l'assise du siège en configuration fauteuil pour au moins un des deux sièges.

De préférence pour répartir le décalage en hauteur entre les deux plans de couchage et limiter les amplitudes des déplacements verticaux des sièges, le plan de couchage de l'un des deux sièges est au-dessus d'une position en hauteur des assises des sièges en configuration fauteuil et le plan de couchage de l'autre siège est en dessous de la position des assises.

Afin que chaque couchage d'un bloc situé derrière un bloc considéré, dans le même sens et sensiblement suivant le même axe, dispose d'une surface de couchage indépendante, la colonne comporte deux zones pieds séparées l'une de l'autre et ouvertes en direction de l'arrière du bloc.

Chaque zone pieds comporte une surface de repos sensiblement dans un plan horizontal. Les zones pieds sont ouvertes sur l'arrière, en direction du bloc situé derrière le bloc considéré. Les zones pieds sont situées, en hauteur, pour que les surfaces de repos destinées à poser les pieds en position couchée se trouvent chacune à la hauteur du plan de couchage duquel elles font parties lorsque les sièges d'un bloc situé derrière le bloc considéré sont en configuration couchage.

Dans un mode préféré de réalisation le plan de couchage d'un siège en configuration couchage est déterminé par l'assise dudit siège, le dossier et l'appui-tête dudit siège, un repose jambes dudit siège et ou un ou des panneaux mobiles, prolongé par une surface de repos d'une zone pieds d'un bloc similaire qui serait placé devant le bloc considéré ou, pour le premier bloc d'une ligne de blocs, d'une coque arrière modifiée ayant des caractéristiques similaires aux colonnes latérales d'un bloc, l'assise, le dossier, l'appui-tête, le repose jambes, le ou les panneaux mobiles et la zone de repos, pour ceux qui sont effectivement mis en oeuvre pour réaliser le couchage, étant alignés sensiblement horizontalement et dans même plan pour former le couchage.

Pour assurer dans la zone tête, en particulier pour le couchage le plus bas, un espace suffisant au confort des passagers, les plans de couchage des deux sièges, lorsque les sièges sont tous les deux dans la configuration couchage sont décalés en hauteur d'une distance de confort suffisante par exemple comprise entre 350mm et 500mm.

Cette hauteur suffisante en général permet de limiter l'amplitude des mouvements des sièges vers le haut et vers le bas et de simplifier les parties mécaniques en charge de permettre les mouvements en question.

Les colonnes latérales d'un bloc dont les dimensions sont imposées au moins par celles des zones pieds devant être disponibles forme un volume important qui n'est pas utilisé en totalité par les zones pieds et qui avantageusement permet d'intégrer de manière relativement aisée des équipements techniques du bloc et ou des équipements de confort ou de distraction à l'usage des occupants de sièges d'un bloc situé derrière le bloc considéré.

L'invention concerne également une cabine ou une partie de cabine pour le transport de passagers comportant au moins une ligne d'au moins deux blocs de deux sièges de l'invention agencés l'un derrière l'autre dans un même sens d'orientation des sièges et séparés suivant une direction de la ligne de blocs par un pas **X** caractérisant la distance entre un point de référence de chacun des blocs.

Dans la cabine d'avion de l'invention, pour chacun des deux sièges d'un bloc, suivant dans le sens de l'orientation des sièges un autre bloc le précédant, en configuration couchage, un plan de couchage de chaque siège est prolongé par une zone pieds située en avant du siège à l'intérieur du bloc le précédant dans la colonne latérale située du même côté du bloc que le siège considéré.

En outre, les plans de couchage des sièges d'un bloc en configuration couchage étant à des hauteurs différentes au-dessus du plancher de la cabine pour éviter les interférences entre les espaces occupés par les deux couchages d'un bloc dans la zone têtes du bloc, pour faciliter le passage d'un passager, occupant le couchage le plus haut, entre son siège et l'allée de circulation de la cabine, le siège d'un bloc ayant le plan de couchage situé en hauteur le plus proche du plancher de la cabine est situé d'un côté du bloc bordé par une allée de circulation.

Ainsi la cabine propose aux passagers des couchages de longueur supérieure au pas des sièges ce qui permet d'augmenter le nombre de siège pour une longueur donnée de cabine ou de diminuer la longueur de la cabine pour un nombre de sièges installés.

Pour s'adapter à des contraintes de l'aménagement d'une cabine donnée ou pour proposer des couchages de dimensions différentes, le pas **X** des blocs d'au moins une ligne de blocs est modulé pour former en configuration couchage des couchages de différentes longueurs **L0** suivant le bloc considéré.

Avantageusement le bloc le plus avant dans une ligne de blocs est précédé, vers l'avant dans un sens d'orientation des sièges de ladite ligne, d'une coque arrière modifiée comportant des colonnes latérales similaires aux colonnes latérales d'un bloc afin de disposer du même confort de couchage sur les sièges d'un premier bloc à l'avant d'une ligne de blocs en mettant en oeuvre un bloc conforme aux autres blocs mis en oeuvre dans la ligne de blocs et de manière générale dans la cabine.

Un véhicule pour le transport de passagers, en particulier un véhicule de transport terrestre ou un véhicule de transport maritime ou encore un véhicule de transport aérien, proposant une telle cabine permet de proposer avec une densité améliorée de passagers le confort d'un véritable couchage à plat, en particulier lorsque la durée des voyages ne justifie pas, au regard du service offert des cabines passagers séparées.

La description d'un mode de réalisation de l'invention est faite en référence aux figures qui représentent de manière schématique :
- Figure 1 :: en vue de dessus, un ensemble de trois blocs de deux sièges suivant l'invention alignés dans une cabine de passagers ;
- Figures 2a et 2b :: en perspective, vue de l'arrière sur la figure 2a et vue de l'avant sur la figure 2b, un ensemble de deux blocs similaires aux blocs illustrés sur la figure 1 ;
- figure 3 :: un exemple de plan d'aménagement d'une cabine d'avion suivant l'invention.

La présente invention concerne un siège 3 convertible entre une position fauteuil, dans laquelle un occupant du siège est dans une position assise, et une position couchage à plat, dans laquelle un occupant du siège est étendu sensiblement à plat et sensiblement horizontalement.

Plus particulièrement l'invention concerne un agencement côte à côte de deux sièges convertibles individuellement en couchage à plat, dit bloc 2, et concerne un moyen de transport de passagers, par exemple un d'avion, dont une cabine ou une partie de cabine met en oeuvre au moins deux blocs agencés en ligne l'un derrière l'autre.

Dans la présente description et les dessins associés, un numéro de repère désignant un même élément ou un élément similaire sera le cas échéant suivi de l'indice « a » lorsqu'il se référera à l'élément dans une configuration « fauteuil » du siège et de l'indice « c » lorsqu'il se référera à l'élément dans une configuration « couchage » du siège, ces deux configurations, ainsi qu'une configuration dite relax correspondant à une position intermédiaire non illustrée, étant détaillées dans la description à suivre.

Par exemple un siège sera porteur du repère 3 de manière générale, le repère 3a désignant un siège en configuration fauteuil et le repère 3c un siège en configuration couchage.

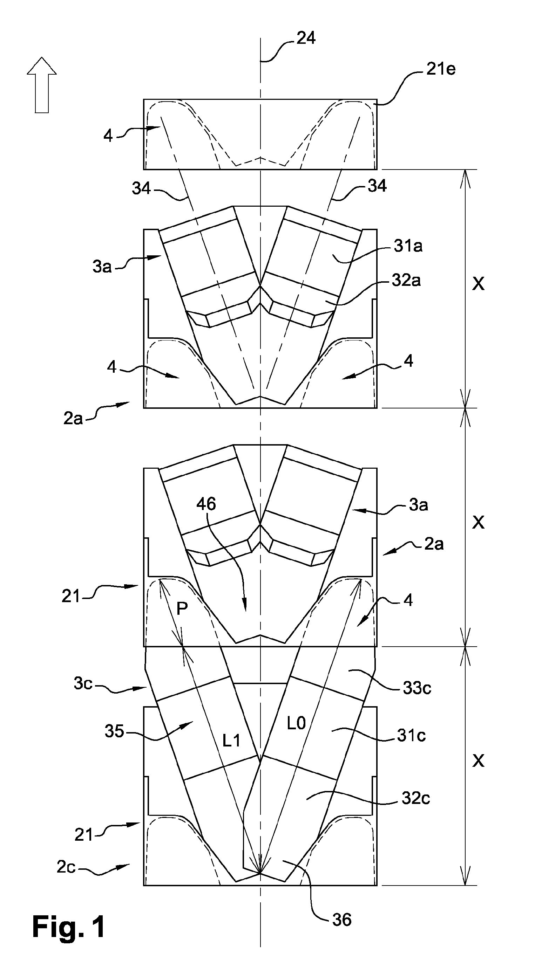

La figure 1 représente, en vue de dessus, trois blocs 2 alignés les uns derrière les autres d'une rangée de blocs pouvant en comporter un nombre quelconque suivant un arrangement similaire en fonction des dimensions de la cabine.

Bien que non obligatoire, les sièges sont le plus souvent orientés le passager d'un siège regardant vers l'avant de la cabine dans le sens du déplacement, matérialisé par une flèche sur la figure, et cette convention de sens sera utilisée dans la suite de la description détaillée.

D'une manière générale dans la présente description, sauf précision contraire, les termes et expressions « avant », « arrière », « haut », « bas », « au-dessus », « en dessous », « vers l'avant », « vers l'arrière », « vers le haut », « vers le bas », «sur le côté »... ont le sens commun que leur donnerait un occupant du siège par rapport à sa position lorsqu'il est assis en configuration fauteuil.

Sur la figure 1 les sièges 3a des deux blocs 2a les plus avant sont illustrés en configuration fauteuil et les sièges 3c du bloc 2c arrière sont illustrés en configuration couchage à plat.

De manière connue un siège 3 comporte principalement une assise 31, un dossier 32 dont une partie haute en configuration fauteuil correspond à un appui tête 36 et éventuellement, et de préférence, un repose jambes 33.

De manière également connue, en configuration fauteuil du siège 3a le dossier 32a est redressé dans une position proche de la verticale et le repose jambe 33, non visible en vue de dessus sur les sièges 3a du bloc avant 2a est replié vers le bas pour reproduire la configuration classique d'un siège ou d'un fauteuil.

En configuration de couchage à plat du siège 3c l'assise 31c, le dossier 32c et le repose jambe 33c sont dans une position sensiblement horizontale et alignés pour former un plan de couchage 35.

Dans une configuration relax du siège, non illustrée, l'assise 31 et le dossier 32 forment un angle ouvert vers le haut, le dossier étant incliné vers l'arrière, et le cas échéant l'assise 31 et le repose jambes 33 forment un angle ouvert vers le bas de sorte que le siège 3 présente un profil en forme de Z couché plus ou moins ouvert.

Chaque siège comporte un axe longitudinal 34 correspondant, en vue de dessus, à la trace d'un plan de symétrie vertical du siège 3 et un bloc 2 comporte un axe longitudinal 24 correspondant, en vue de dessus, à la trace d'un plan de symétrie vertical d'ensemble du bloc, les deux sièges 3 d'un bloc étant eux-mêmes agencés dans le bloc côte à côte avec une position longitudinale similaire dans le bloc 2 et sensiblement orienté dans un même sens.

Cependant, comme il est bien visible sur la figure 1 les sièges 3 présentent la particularité de ne pas être orientés exactement dans le même sens et les axes longitudinaux 34 de chacun des deux sièges d'un bloc 2 convergent vers l'axe dudit bloc en arrière des sièges.

Dans le mode de réalisation illustré préféré, l'agencement des sièges d'un bloc est symétrique et les axes des deux sièges du bloc convergent en pratique, en vue de dessus, vers un même point de convergence situé en arrière des sièges, sensiblement dans le plan de symétrie vertical du bloc.

Cette configuration convergente est associée à des colonnes latérales 4 situées de chaque côté d'un bloc 2 donné au niveau des dossiers des sièges 3 du bloc considéré lorsque les sièges sont en configuration de couchage.

Lorsque les sièges 3c d'un bloc sont en configuration couchage, les dossiers 32c des deux sièges du bloc 2 sont inclinés vers l'arrière en position sensiblement horizontale et des parties hautes des dossiers et les appuis-tête 36 se trouvent alors situés dans une zone tête 46 d'une coque arrière 21 du bloc et située entre les colonnes latérales 4 du même bloc.

Ces colonnes latérales 4 sont intégrées dans la structure du bloc 2 au niveau de la coque arrière 21 assurant une enveloppe de la partie arrière des sièges du bloc.

Les colonnes latérales 4 sont situées longitudinalement sensiblement au niveau de la convergence des axes longitudinaux 34 des sièges 3 dans un emplacement où une distance latérale entre lesdits axes longitudinaux est réduite en raison de leur convergence.

Plus particulièrement la convergence des axes longitudinaux 34 des sièges 3 est telle que lorsqu'un siège 3 d'un bloc situé juste en arrière du bloc 2 considéré est placé dans la configuration de couchage à plat, les colonnes latérales 4 se trouvent, en vue de dessus, sensiblement dans le prolongement du couchage formé et au niveau des pieds d'un occupant du siège dans la configuration couchage.

Ainsi, comme l'illustre la figure 1, les colonnes latérales 4 intégrées dans la coque arrière 21 sont dans le prolongement du couchage formé par chacun des sièges 3c du bloc 2c situé derrière.

Une autre particularité des sièges de l'invention est que la surface de couchage formée par le dossier 32c avec l'appui-tête 36, l'assise 31c et le repose jambe 33c d'un siège est inférieure suivant une longueur **L1** dite longueur de base, dans le sens d'une direction longitudinale de la couchette correspondant sensiblement à la direction de l'axe longitudinal 34 du siège, à une longueur **L0** souhaitée pour le couchage à plat et qu'une dimension des colonnes latérales 4 suivant les directions des axes 34 des sièges 3 du bloc 2 situé en arrière de ladite colonne, dite profondeur **P** de colonne latérale, correspond sensiblement à la longueur supplémentaire qui doit être ajoutée à la longueur de base **L1** pour obtenir la longueur **L0** recherchée pour le couchage.

Les colonnes latérales 4 d'un bloc déterminent ainsi, à l'avant de chaque siège 3 du bloc situé immédiatement en arrière, un espace associé à chaque siège à l'avant du siège considéré en configuration couchage, dit zone pieds 41, dans lequel, sous réserve des aménagements détaillés ci-après, les pieds d'un occupant du siège en configuration couchage à plat peuvent être introduit si la taille de la personne le nécessite.

On comprend donc que les colonnes latérales 4 sont, au moins dans le prolongement du couchage à plat, d'une part creux et d'autre part ouverts dans les directions des sièges 3 du bloc 2 situé en arrière.

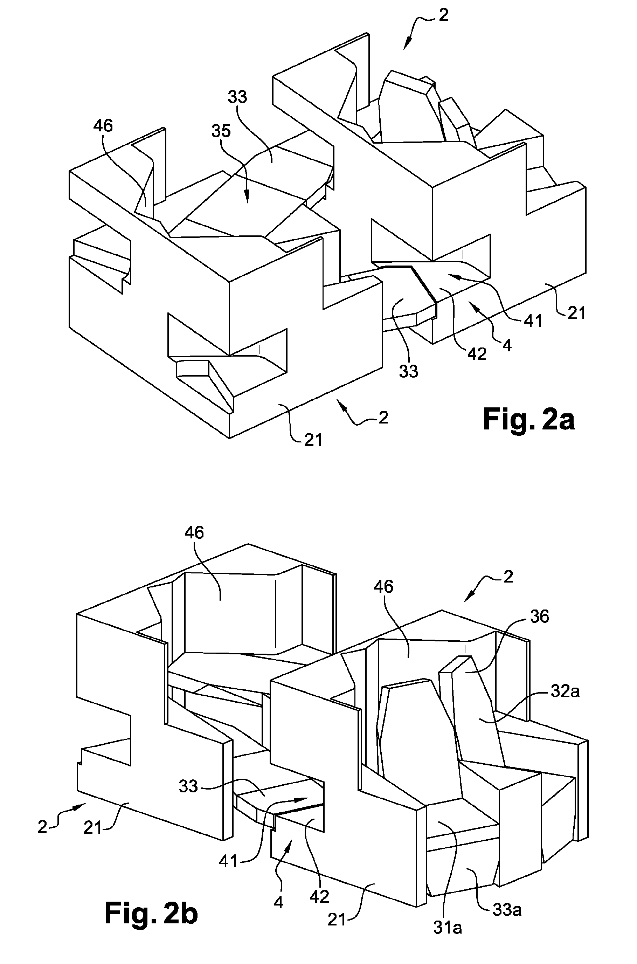

En outre, pour assurer le repos des pieds, en cas de nécessité si le repose jambe 33 ne présente pas une longueur suffisante pour assurer au couchage la longueur voulue, une surface de repos 42 sensiblement horizontale, avec un capitonnage éventuel adapté à cet usage, est positionnée dans le prolongement et à la même hauteur que les autres surfaces du couchage à plat comme illustré sur les figures 2a et 2b.

On comprend également que la profondeur **P** ici considérée est une dimension intérieure de parties creuses des colonnes latérales 4 dont des parois présentent nécessairement une certaine épaisseur, même si cette épaisseur peut être relativement réduite compte tenu de charges limitées subies par la structure de la coque arrière 21 du siège, et que la hauteur de la surface de repos 42 est a priori fixe.

Compte tenu de leur disposition géométrique et du fait de la convergence des axes 34 des sièges, en vue de dessus, comme illustré sur la figure 1, les appuis têtes 36 des deux sièges d'un bloc se superposent au moins partiellement au niveau d'une zone d'interférence lorsque les deux sièges sont en configuration couchage.

Pour résoudre le conflit apparent entre les volumes nécessaires aux deux couchages d'un bloc au niveau de la zone tête 46 d'une coque arrière 21, une autre particularité de l'invention concerne les positions en hauteur relatives des plans de couchage à plat 35 des deux sièges 3 d'un même bloc 2.

En se reportant à la figure 2a qui illustre deux blocs de la figure 1 en perspective vue partiellement de l'arrière, on constate que les deux plans de couchages à plat 35 d'un bloc 2 sont décalées en hauteur de sorte que chaque siège du bloc dispose dans la zone tête 46 d'un volume qui lui est propre, la séparation des deux volumes étant réalisé par le décalage en hauteur, et en outre chaque couchage à plat dispose également d'une zone pieds 41 dédiée qui se trouve dans la colonne latérale 4 du côté correspondant du bloc situé devant le bloc considéré.

Ce décalage en hauteur permet de profiter de toute la longueur possible de la coque arrière 21 tant pour la zone tête 46 que pour les zones pieds 41 qui se trouvent juxtaposés et superposés sur une largeur de la coque arrière 21.

Le plan de couchage 35 de chaque siège 3 et la surface de repos 42 correspondante de la zone pieds 41 sont placés à la même hauteur dans le prolongement l'un de l'autre, lorsque les zones pieds comportent des surface de repos pour les pieds (cas illustré), ou bien sont de dimensions suffisantes de sorte que le repose jambe 33 du siège se déploie en configuration de couchage à plat à l'intérieur de la colonne latérale 4 correspondant lorsque le repose jambe assure le soutien des pieds en configuration de couchage à plat (cas non illustré).

Lorsque les sièges 3 de l'invention sont mis en oeuvre pour être convertis depuis la configuration fauteuil, dans laquelle a priori les assises 31 des sièges 3 sont situées sensiblement à la même hauteur par rapport à un plancher de la cabine, vers une configuration de couchage à plat, l'un des sièges 3 du bloc 2 subit un mouvement d'ensemble vers le bas alors que le siège voisin dudit bloc subit un mouvement d'ensemble vers le haut.

Ces mouvements vers le bas et vers le haut sont des mouvements relatifs entre les deux sièges, le résultat important étant d'atteindre un décalage en hauteur par rapport au plancher recherché entre les positions finales couchées et une séparation en hauteur suffisante pour le confort des utilisateurs.

En pratique, pour éviter des mouvements de grandes amplitudes dans le sens vertical pour l'un des sièges et également pour éviter d'avoir un des couchages trop haut ou un des couchages trop bas, il est avantageux de partager le déplacement vertical à réaliser entre les deux sièges du bloc.

Les mouvements d'un siège 3 d'un bloc 2 sont de préférence indépendants des mouvements de l'autre siège du bloc.

Dans un exemple de réalisation, considérant une valeur courante de la hauteur de l'assise d'un fauteuil au-dessus du plancher de la cabine de 430mm environ, le plan de couchage 35 du siège prenant la position la plus basse est descendu de 180mm pour maintenir le plan de couchage de ce siège à environ 250mm au-dessus du plancher de la cabine et le plan de couchage du siège prenant la position la plus haute est relevé de 250mm, soit 430mm au-dessus du plan de couchage le plus bas, afin de réaliser dans la zone tête 46 une séparation verticale d'environ 400mm de hauteur compte tenu des épaisseurs des panneaux et capitonnages nécessaires, une séparation comprise entre 350mm et 500mm s'avérant le plus souvent satisfaisante en fonction du confort recherché.

Les mouvements nécessaires des différentes parties des sièges sont réalisés par tout dispositif ayant une cinématique adaptée aux mouvements et combinaisons de mouvements voulues.

Le mouvement vertical désiré est par exemple obtenu soit par un dispositif commun aux mouvements des parties du siège 3 : dossier 32, assise 31 et repose-jambes 33, pour assurer la conversion entre la configuration fauteuil et la configuration couchage, ou obtenu par un dispositif séparé du dispositif assurant les mouvements des parties du siège 3 entre elles, par exemple un mécanisme dédié au mouvement vertical tel qu'une colonne télescopique ou un pantographe soutenant l'assise et associé à un actionneur non représenté sur les figures.

Avantageusement les différents mouvements sont réalisés par un ou des actionneurs électriques intégrés dans le siège 3 et pouvant être commandés depuis le siège par son occupant.

En pratique, le mouvement vertical d'un siège 3 doit être réalisé pour éviter les interférences mécaniques qui pourraient se produire entre les deux sièges voisins d'un bloc 2 lors du passage en configuration de couchage à plat en particulier au niveau des appuis-tête 36.

En cas de besoin, chaque siège 3 est pourvu de limitations des mouvements sous la forme de butées mécaniques ou d'une logique de commande des actionneurs afin d'éviter des combinaisons de mouvements de parties mobiles des sièges provoquant des interférences mécaniques.

La description d'un exemple préféré de réalisation est susceptible de variantes à la portée de l'homme du métier sans sortir du cadre de la présente invention.

Par exemple un siège peut comporter une pluralité de positions intermédiaires, voire être réglable en position de manière continue entre les positions extrêmes ou entre la configuration fauteuil et une position intermédiaire.

Dans un mode de réalisation, le siège 3 ne comporte pas de repose jambes 33 ou comporte un repose jambes de dimensions réduites. Ledit siège comporte principalement une assise 31 et un dossier 32, comme détaillé précédemment, et éventuellement le repose jambes de dimensions réduites, qui forment une partie du couchage à plat. Dans ce mode de réalisation, si un espace reste ouvert entre un bord avant de l'assise 31 ou du repose jambes en configuration couchage et la zone pieds 41, ledit espace ouvert est refermé par un panneau mobile, non représenté mais équivalent fonctionnellement au repose jambes 33 dans la position de la configuration couchage.

Un tel panneau mobile est stocké, lorsque le siège est en configuration fauteuil par exemple sous l'assise 31 du siège, ou dans la colonne latérale 4, ou dans la zone pieds 41, ou encore dans une banquette ou une cloison. Ledit panneau mobile est par exemple coulissant ou articulé ou encore détachable et il peut résulter d'un assemblage de panneaux dont l'agencement en position déployée vient compléter la surface de couchage à plat 35.

Dans une forme de réalisation l'orientation de l'axe 34 d'un siège est modifiée en fonction de la configuration dans laquelle le siège est placé.

Par exemple l'axe 34 du siège est orienté parallèlement à l'axe 24 du bloc lorsque le siège est en configuration fauteuil ou en configuration relax et l'axe 24 du siège est orienté pour converger vers un point de l'axe du bloc comme décrit précédemment lorsque le siège est en configuration couchage pour tirer avantage de la zone tête 46 du bloc et des volumes des colonnes latérales 4 du bloc situé en avant. Le changement de l'orientation de l'axe 34 du siège est réalisé par exemple par une rotation de l'assise 32 lors de la conversion vers ou depuis la configuration couchage.

Comme déjà précisé, les orientations des blocs 2 peuvent différer du sens du déplacement du véhicule, en particulier les blocs ou certains des blocs peuvent être orientés face avant des blocs vers l'arrière du véhicule, ou s'éloigner plus ou moins d'un axe du véhicule pour répondre à des contraintes d'installation particulières.

Les limites de ces orientations sont avant tout dictées par des motivations de confort et éventuellement par des raisons de sécurité ou de réglementation, le bénéfice de l'invention étant obtenu par la disposition en ligne d'au moins deux blocs de sièges comme illustré sur les différentes figures.

Dans une forme préférée de réalisation correspondant au cas de l'illustration des figures 2a et 2b, la coque arrière 21, par exemple réalisée en matériaux composites en raison des possibilités que permettent ces matériaux en termes de formes réalisables avec des rigidités et des masses avantageuses, est réalisée en une partie ou en un assemblage de parties et enveloppe les mécanismes assurant les mouvements des éléments des sièges pour des raisons esthétiques et de sécurité des occupants des sièges.

Avantageusement les colonnes latérales 4 dans lesquels sont agencées les zones pieds 41, pour les parties qui ne sont pas occupées par les dites zones pieds sont utilisés pour l'installation de dispositifs essentiels ou accessoires du siège tels que des alimentations des actionneurs de siège et leurs sécurités ou tels que des équipements de confort, éclairages et aérateurs individuels par exemple, ou de divertissement pour les occupants des sièges, en particulier des écrans vidéo, ou encore d'espaces de rangements.

D'autres éléments accessoires sont avantageusement associés à la coque 21 arrière d'un bloc.

Par exemple une cloison de séparation, non représentée, des deux sièges 3 d'un bloc 2 peut être agencée dans le bloc considéré.

Dans un mode de réalisation préféré, cette cloison comporte au moins une position escamotée, au moins partiellement, permettant aux occupants des deux sièges côte à côte de mener une conversation dans de bonnes conditions, et au moins une position développée dans laquelle chaque occupant d'un siège bénéficie d'une intimité relative.

En outre, bien que les dessins illustrent des blocs 2 symétriques à l'échelle des dessins, la symétrie des blocs ou des sièges par rapport à leurs plans de symétrie vertical respectifs peut ne pas être parfaite sans sortir du cadre de la présente invention.

Par exemple les sièges 3 d'un même bloc 2 peuvent avoir des positions longitudinales ou des angles de convergence vers l'axe du bloc légèrement différents, par exemple pour des raisons d'optimisation d'installation ou d'assemblage, sans que les bénéfices de l'invention ne soient remis en cause.

L'invention concerne également un agencement d'une cabine 1 d'un véhicule de transport, par exemple une cabine d'un véhicule terrestre tel qu'un autobus ou un train, d'un véhicule de transport maritime tel qu'un navire de surface ou un aéronef tel qu'un avion, pour le transport de passagers dans lequel agencement des sièges 3 pour les passagers sont disposés en lignes de blocs 2, au moins une ligne d'au moins deux blocs, de deux sièges 3 conformes aux blocs décrits précédemment.

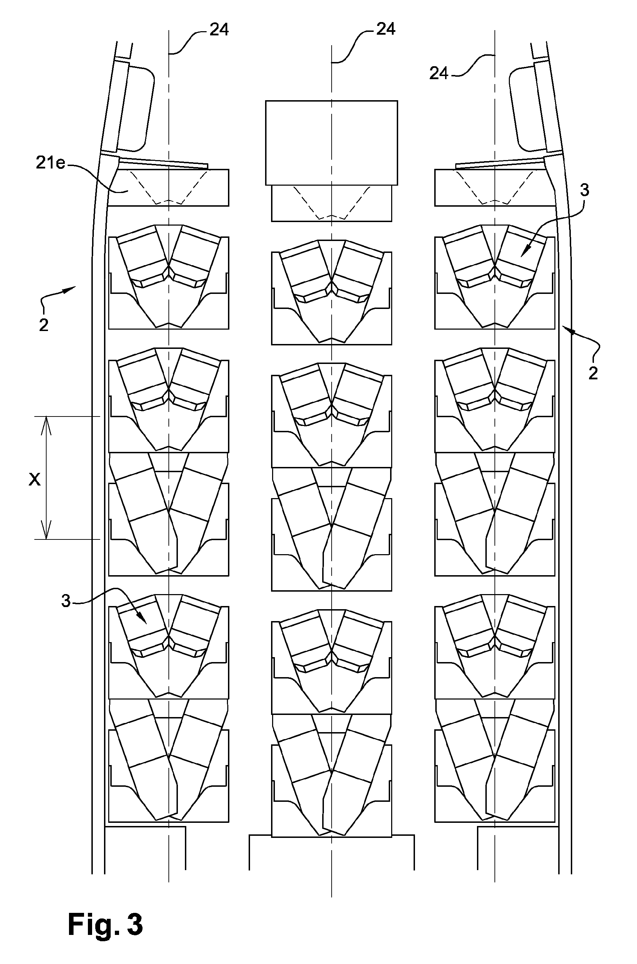

La figure 3 illustre un tel exemple d'agencement d'une cabine d'avion comportant trois lignes de cinq blocs 2 tous orientés de sorte que les passagers sont en configuration fauteuil assis face vers l'avant de l'avion, ces valeurs tant en nombre de lignes qu'en nombre de blocs par ligne et cette orientation ayant un caractère arbitraire pour l'illustration et ne traduisant aucun caractère limitatif de l'invention.

Pour des raisons industrielles et économiques, les différents blocs sont de préférence identiques ou ne diffèrent que par des caractères secondaires, par exemple en raison d'une position ou d'un environnement spécifique dans la cabine.

Dans un tel agencement le pas **X** des sièges 3, c'est à dire également le pas des blocs 2 de deux sièges, correspondant à la distance entre deux blocs successifs séparant un point de référence des sièges, est inférieure à la longueur **L0** en raison du recouvrement longitudinale des zones pieds41 et de la zone tête 46, ainsi que par l'angle formé par l'axe 34 des sièges par rapport à l'axe 24 de la ligne de blocs ayant un effet multiplicatif sur le pas par le cosinus dudit angle.

De préférence les blocs sont réalisés et agencés dans la cabine de sorte que le siège 3 d'un bloc dont le plan de couchage 35 est le plus bas par rapport au plancher de la cabine, en configuration couchage, se trouve du côté d'une allée.

Ainsi, lorsque l'accès à une allée par l'occupant du couchage le plus haut nécessite d'enjamber le couchage le plus bas, ce mouvement s'en trouve grandement facilité.

Cette situation se rencontre dans le cas des lignes de blocs se trouvant sur les côtés de la cabine le long des parois du fuselage dans le cas de la figure 3, le passager occupant la couchette du côté de la paroi ne pouvant accéder à l'allée qu'en enjambant la couchette du côté de l'allée.

Cette situation se retrouve également dans une configuration d'aménagement, non représentée, qui comporte deux lignes de blocs sans allée entre les dites deux lignes, par exemple dans une configuration d'un fuselage dont la largeur permet d'installer quatre lignes de blocs dont deux lignes sont rapprochées, quasiment jointives, et encadrées par une allée de chaque côté des dites deux lignes rapprochées.

Pour permettre aux sièges 3 du premier bloc 2 à l'avant d'une ligne de blocs de bénéficier de la configuration couchage avec la longueur de couchage souhaité, une coque arrière modifiée 21e, présentant des colonnes latérales 4 similaires à celles de la coque arrière 21 d'un bloc 2, mais non intégrée dans un bloc, est agencé dans la cabine 1 à l'emplacement que cette coque arrière aurait si un autre bloc se trouvait devant le bloc considéré.

Cette coque arrière modifiée 4e peut être isolée comme dans l'exemple illustré sur la figure 3 ou avantageusement être intégrée dans d'autres aménagements, par exemple des cloisons de séparation de la cabine, des vestiaires ou des meubles de rangement.

Le bloc le plus arrière d'une ligne de bloc est également dans une situation particulière, n'étant suivi d'aucun bloc en arrière.

Avantageusement les colonnes latérales 4 de ce bloc sont utilisées pour créer des espaces de rangement, intégrés ou non à des aménagements dans une partie arrière de la cabine 1.

Dans un exemple de réalisation, les axes longitudinaux 34 des sièges d'un bloc forment un angle de 37 degrés, les logements de pieds 41 des colonnes latérales 4 ont des profondeurs **P** de 500mm environ et le pas **X** des sièges est de 1524mm (60 pouces) permettant de réaliser avec ce pas de siège, généralement associé à des sièges limités à la configuration relax, des couchages à plat de 1800mm au moins. Ces valeurs sont susceptibles d'être adaptées pour les besoins de cas particuliers.

Ainsi un aménagement comportant cinq blocs par ligne, comme l'aménagement présenté sur la figure 3, exige une longueur de cabine inférieure de 1380mm à celle qui serait nécessaire pour installer un nombre équivalent de couchage à plat de même longueur utilisant les sièges connus dans les aménagements actuels.

On remarquera que ce gain en longueur de couchage pour un pas de sièges diminué est réalisé au prix d'un élargissement des blocs de sièges en raison de la juxtaposition latérale des colonnes latérales 4 et de la zone tête 46.

Cet élargissement est cependant maîtrisé par une combinaison des formes choisies pour les différents éléments constituant un bloc.

D'une part les zones pieds 41 présentent en vue de dessus une section globalement triangulaire dont une pointe est orientée vers l'avant, forme rendue possible par la convergence des axes 34 des sièges de chaque bloc 2.

D'autre part les dossiers 32 des sièges 3 présentent une largeur diminuée au niveau d'une partie supérieure du dossier en configuration fauteuil et de l'appui-tête qui n'exige pas une largeur aussi importante que dans une zone dorsale.

Ainsi, lorsque le dossier est incliné vers l'arrière pour placer le siège en configuration relax ou en configuration couchage, la partie supérieure du dossier 32 est en mesure de prendre une position plus arrière qu'en configuration fauteuil sans interférence avec la colonne latérale 4 située du même côté.

Ainsi, comme l'illustre la figure 1 au niveau du bloc intermédiaire représenté en configuration couchage, la forme du dossier 32c et de l'appui tête 36 est adaptée à la présence de la colonne latérale 4 et permet de réduire la largeur maximale de la coque arrière 21par un rapprochement des colonnes latérales 4 de la coque arrière.

Dans un exemple de réalisation, sans qu'il soit fait de concession toujours possible sur la largeur de l'assise des sièges, c'est à dire en maintenant l'assise 31 avec une largeur confortable de 533mm (21 pouces), la largeur des blocs 2 de deux sièges est portée de 1372mm (54 pouces) dans une configuration conventionnelle, comportant deux sièges côte à côte sans séparation et dont les axes sont parallèles, à une largeur de 1448mm (57 pouces).

Des analyses d'aménagement de diverses cabines d'avion révèlent que l'augmentation de largeur des blocs, de 76mm dans l'exemple de réalisation, ne pose le plus souvent pas de problème particulier lorsque la section du fuselage conduit à réduire en conséquence la largeur de la ou des allées de circulation entre les lignes de blocs.

Dans un mode particulier de mise en oeuvre de l'invention, des blocs 2 sont réalisés pour répondre à des longueurs de couchage différentes.

En adaptant des dimensions du repose jambes et ou de panneaux mobiles entre l'assise 31 et la zone pieds 41, et en adaptant le pas **X** des blocs, il est aisé d'augmenter ou de diminuer la longueur des couchages d'un bloc.

Cet avantage permet par exemple de proposer une cabine à confort augmenté ou d'optimiser la configuration d'une cabine en offrant, sans remettre en cause la conception des blocs eux-mêmes, certaines places avec des couchages de longueur supérieure à la moyenne et ou des couchages de longueur inférieure à la moyenne par une modulation du pas **X** d'installation des blocs 2.

Cette solution s'avère particulièrement avantageuse lorsque la longueur d'une cabine, qui peut être imposée par d'autres exigences : issues, aménagements fixes de l'avion ..., ne correspond pas exactement à un nombre entier de blocs agencés avec un pas standard et que certaines places peuvent être « allongées » pour répondre à des besoins exceptionnels pour certains passagers plus grands que la moyenne.

L'invention permet donc de réaliser des sièges de grand confort en configuration de couchage à plat avec un pas entre les sièges sensiblement inférieur à la longueur du couchage et d'aménager des cabines pour passagers, en particulier des cabines d'avion, avec un nombre de sièges supérieur à celui d'un aménagement avec les sièges connus pour une longueur de couchage donnée et une cabine donnée, ou de diminuer la longueur d'une cabine pour un nombre de sièges donné et une longueur de couchage donnée.

## Revendications

1. Bloc (2) de deux sièges (3) dans lequel chaque siège (3) est convertible individuellement, par un mouvement relatif d'éléments (31, 32, 33, 36) du siège, entre une configuration fauteuil, dans laquelle un occupant du siège est dans une position assise, et une configuration couchage, dans laquelle des éléments du siège forment un plan de couchage (35) et dans laquelle un occupant du siège est étendu sensiblement à plat et sensiblement horizontalement, dans lequel bloc les deux sièges (3) sont agencés côte à côte et orientés sensiblement dans un même sens, où
• en configuration couchage, un axe longitudinal (34) de chacun des sièges (3) converge vers un point de convergence situé dans un plan vertical de symétrie du bloc en arrière des dits sièges de telle sorte que les axes longitudinaux (34) des deux sièges du bloc sont rapprochés au niveau d'une zone tête (46) dudit bloc **caractérisé en ce que** dans laquelle zone tête des parties supérieures des dossiers et ou des appuis-tête (36) des deux sièges (3) sont superposés, au moins en partie, dans une projection verticale ;
• lorsque les deux sièges (3) sont en configuration couchage, le plan de couchage (35) d'un des deux sièges est situé à une hauteur différente, par rapport à une surface de référence correspondant à un plancher de cabine lorsque ledit bloc est installé dans une cabine, du plan de couchage de l'autre siège.

2. Bloc de deux sièges suivant la revendication 1 comportant dans une partie arrière sensiblement de chaque côté de la zone tête (46) une colonne latérale (4) comportant une zone pieds (41), ladite zone pieds étant sensiblement dans l'axe longitudinal (34) d'un siège (3), situé du même côté que la colonne latérale considérée, d'un bloc similaire qui serait placé derrière le bloc (2) considéré, dans le même sens et sensiblement suivant le même axe, avec une distance de séparation, dit pas **X** des blocs, entre les deux blocs inférieure à une longueur désirée **L0** du couchage dudit bloc similaire en arrière.

3. Bloc de deux sièges suivant la revendication 2 dans lequel le plan de couchage (35) dans la configuration couchage est au-dessus en hauteur de la position d'une assise (31) du siège en configuration fauteuil pour au moins un des deux sièges (3).

4. Bloc de deux sièges suivant la revendication 2 dans lequel le plan de couchage (35) dans la configuration couchage est en dessous en hauteur de la position d'une assise (31) du siège en configuration fauteuil pour au moins un des deux sièges (3).

5. Bloc de deux sièges suivant la revendication 2 dans lequel, lorsque les deux sièges (3) sont en configuration couchage, le plan de couchage (35) de l'un des deux sièges est au-dessus en hauteur de la position des assises (35) des sièges en configuration fauteuil et le plan de couchage (35) de l'autre siège est en dessous de la position des assises (35).

6. Bloc de deux sièges suivant l'une des revendications 2 à 5 dans lequel les zones pieds (41) comportent chacune une surface de repos (42) sensiblement dans un plan horizontal, chaque zone pieds (41) étant ouverte vers l'arrière et étant située à une hauteur dans la colonne latérale (4) de telle sorte que les surfaces de repos (42) se trouvent chacune à la hauteur d'un plan de couchage duquel les dites surfaces de repos font parties.

7. Bloc de deux sièges suivant la revendication 6 dans lequel le plan de couchage (35) d'un siège en configuration couchage est déterminé par l'assise (31) dudit siège, le dossier (32) et l'appui-tête (36) dudit siège, un repose jambes (33) dudit siège et ou un ou des panneaux mobiles, prolongé par une surface de repos (42) d'une zone pieds (41) d'un bloc similaire qui serait placé devant le bloc (2) considéré ou d'une coque arrière modifiée (21e) ayant des caractéristiques similaires aux colonnes latérales (4) d'un bloc, les dits assise, dossier, appui-tête, repose jambes, panneaux mobiles et zone de repos étant alignés sensiblement horizontalement et dans même plan pour former le couchage.

8. Bloc de deux sièges suivant la revendication 7 dans lequel les plans de couchage (35) des deux sièges (3), lorsque lesdits sièges sont tous les deux dans la configuration couchage sont décalés en hauteur d'une distance comprise dans l'intervalle de 350 à 500 mm.

9. Bloc de deux sièges suivant l'une des revendications 2 à 8 dans lequel les colonnes latérales (4) intègrent des équipements techniques du bloc et ou des équipements de confort ou de distraction à l'usage des occupants de sièges d'un bloc situé derrière le bloc (2) considéré.

10. Cabine (1) ou partie de cabine de véhicule pour le transport de passagers comportant au moins une ligne d'au moins deux blocs (2) de deux sièges (3) conformes à l'une des revendications 2 à 9, les dits au moins deux blocs étant agencés l'un derrière l'autre dans un même sens d'orientation des sièges et séparés suivant une direction de la ligne de blocs par un pas **X** caractérisant la distance entre un point de référence de chacun des blocs (2), ladite cabine d'avion étant **caractérisée en ce que**, pour chacun des deux sièges (3) d'un bloc (2), suivant dans le sens de l'orientation des sièges (3) un autre bloc le précédant, en configuration couchage, un plan de couchage (35) de chaque siège (3) est prolongé par une zone pieds (41) située en avant dudit siège à l'intérieur du bloc le précédant dans la colonne latérale (4) située du même côté du bloc que ledit siège considéré.

11. Cabine suivant la revendication 10 dans laquelle le siège (3) d'un bloc (2) ayant le plan de couchage situé en hauteur le plus proche du plancher de la cabine (1) est situé d'un côté du bloc (2) bordé par une allée de circulation.

12. Cabine suivant la revendication 11 dans laquelle le pas **X** des blocs (2) d'au moins une ligne de blocs est modulé pour former en configuration couchage des couchages de différentes longueurs **L0** suivant le bloc (2) considéré.

13. Cabine suivant l'une des revendications 10 à 12 dans laquelle le bloc (2) le plus avant dans une ligne de blocs est précédé, vers l'avant dans un sens d'orientation des sièges (3) de ladite ligne, d'une coque arrière modifiée (21e) comportant des colonnes latérales (4) similaires aux colonnes latérales d'un bloc (2).

14. Véhicule pour le transport de passager comportant une cabine ou une partie d'une cabine conforme à l'une des revendications 10 à 13, ledit véhicules appartenant à l'une des catégories de transport de passagers par terre, par mer ou par air.

## Patentansprüche

1. Block (2) aus zwei Sitzen (3), wobei jeder Sitz (3) durch eine Relativbewegung von Elementen (31, 32, 33, 36) des Sitzes zwischen einer Sitzkonfiguration, in der sich ein Benutzer des Sitzes in einer sitzenden Stellung befindet, und einer Schlafkonfiguration, in der die Elemente des Sitzes eine Schlafebene (35) bilden und in der ein Benutzer des Sitzes im Wesentlichen flach und im Wesentlichen horizontal ausgestreckt ist, individuell umwandelbar ist, wobei in dem Block die beiden Sitze (3) nebeneinander angeordnet sind und im Wesentlichen in der gleichen Richtung ausgerichtet sind, wobei
- in der Schlafkonfiguration eine Längsachse (34) jedes Sitzes (3) zu einem sich in einer vertikalen Symmetrieebene des Blocks hinter den Sitzen befindenden Konvergenzpunkt konvergiert, so dass die Längsachsen (34) der beiden Sitze des Blocks in einem Kopfbereich (46) des Blocks aneinander angenähert sind, **dadurch gekennzeichnet, dass**
in dem Kopfbereich obere Teile der Rückenlehnen und/oder Kopfstützen (36) der beiden Sitze (3) zumindest teilsweise in einer vertikalen Projektion übereinander gelagert sind;
- wenn sich die beiden Sitze (3) in der Schlafkonfiguration befinden, sich die Schlafebene (35) eines der beiden Sitze auf einer anderen Höhe bezüglich einer Bezugsfläche, die einem Kabinenboden entspricht, wenn der Block in einer Kabine installiert ist, als die Schlafebene des anderen Sitzes befindet.

2. Block aus zwei Sitzen nach Anspruch 1, der in einem hinteren Teil im Wesentlichen auf jeder Seite des Kopfbereichs (46) eine laterale Stütze (4) umfasst, die einen Fußbereich (41) umfasst, wobei sich der Fußbereich im Wesentlichen entlang der Längsachse (34) eines Sitzes (3), der sich auf der gleichen Seite wie die betreffende laterale Stütze befindet, eines ähnlichen Blocks befindet, der hinter dem betreffenden Block (2) in der gleichen Richtung und im Wesentlichen entlang der gleichen Achse mit einer als Blockabstand X bezeichneten Entfernung zwischen den beiden Blöcken von weniger als einer gewünschten Schlaflänge L0 des ähnlichen Blocks dahinter platziert wäre.

3. Block aus zwei Sitzen nach Anspruch 2, wobei die Schlafebene (35) in der Schlafkonfiguration vertikal über der Position einer Sitzfläche (31) des Sitzes in der Sitzkonfiguration für mindestens einen der beiden Sitze (3) liegt.

4. Block aus zwei Sitzen nach Anspruch 2, wobei die Schlafebene (35) in der Schlafkonfiguration vertikal unter der Position einer Sitzfläche (31) des Sitzes in der Sitzkonfiguration für mindestens einen der beiden Sitze (3) liegt.

5. Block aus zwei Sitzen nach Anspruch 2, wobei, wenn sich die beiden Sitze (3) in der Schlafkonfiguration befinden, die Schlafebene (35) eines der beiden Sitze vertikal über der Postition der Sitzflächen (31) der Sitze in der Sitzkonfiguration liegt und die Schlafebene (35) des anderen Sitzes unter der Position der Sitzflächen (31) liegt.

6. Block aus zwei Sitzen nach einem der Ansprüche 2 bis 5, wobei die Fußbereiche (41) jeweils eine Auflagefläche (42) im Wesentlichen in einer horizontalen Ebene umfassen, wobei jeder Fußbereich (41) nach hinten hin offen ist und sich auf einer solchen Höhe in der lateralen Stütze (4) befindet, dass sich die Auflageflächen (42) jeweils auf der Höhe einer Schlafebene befinden, von der die Auflageflächen einen Teil bilden.

7. Block aus zwei Sitzen nach Anspruch 6, wobei die Schlafebene (35) eines Sitzes in der Schlafkonfiguration durch die Sitzfläche (31) des Sitzes, die Rückenlehne (32) und die Kopfstütze (36) des Sitzes, eine Beinstütze (33) des Sitzes und/oder eine oder mehrere bewegliche Platten, die durch eine Auflagefläche (42) eines Fußbereichs (41) eines ähnlichen Blocks, der vor dem betreffenden Block (2) platziert werden würde, oder einer modifizierten hinteren Schale (21e), die ähnliche Eigenschaften wie die lateralen Stützen (4) eines Blocks aufweist, bestimmt wird, wobei die Sitzfläche, die Rückenlehne, die Kopfstütze, die Beinstützen, die beweglichen Platten und der Auflagebereich im Wesentlichen horizontal und in der gleichen Ebene ausgerichtet sind, um den Schlafplatz zu bilden.

8. Block aus zwei Sitzen nach Anspruch 7, wobei die Schlafebenen (35) der beiden Sitze (3), wenn sich alle beiden Sitze in der Schlafkonfiguration befinden, vertikal in einem Abstand zwischen 350 und 500 mm versetzt sind.

9. Block aus zwei Sitzen nach einem der Ansprüche 2 bis 8, wobei in den lateralen Stützen (4) technische Ausrüstung für den Block und/oder Komfort- oder Unterhaltungseinrichtungen zur Benutzung durch die Sitzbenutzer eines sich hinter dem betreffenden Block (2) befindenden Blocks integriert sind.

10. Kabine (1) oder Kabinenteil eines Fahrzeugs für den Transport von Passagieren, umfassend mindestens eine Reihe von mindestens zwei Blöcken (2) mit zwei Sitzen (3) nach einem der Ansprüche 2 bis 9, wobei die mindestens zwei Blöcke in der gleichen Richtung der Sitzausrichtung hintereinander angeordnet und in einem Abstand X, der die Entfernung zwischen einem Bezugspunkt jedes der Blöcke (2) kennzeichnet, entlang einer Richtung der Blockreihe getrennt sind, wobei die Flugzeugkabine **dadurch gekennzeichnet ist, dass** für jeden der beiden Sitze (3) eines Blocks (2), der einem anderen, ihm vorausgehenden Block entlang der Richtung der Ausrichtung der Sitze (3) folgt, in der Schlafkonfiguration eine Schlafebene (35) jedes Sitzes (3) durch einen Fußbereich (41) verlängert wird, der sich vor dem Sitz in dem ihm vorausgehenden Block in der lateralen Stütze (4) befindet, die sich auf der gleichen Seite des Blocks wie der betreffende Sitz befindet.

11. Kabine nach Anspruch 10, wobei sich der Sitz (3) eines Blocks (2) mit der sich vertikal am nächsten zum Boden der Kabine (1) befindenden Schlafebene auf einer Seite des Blocks (2) befindet, die durch einen Gang begrenzt wird.

12. Kabine nach Anspruch 11, wobei der Abstand X der Blöcke (2) mindestens einer Blockreihe zum Bilden in der Schlafkonfiguration von Schlafliegen verschiedener Länge L0 entlang dem betreffenden Block (2) modifiziert ist.

13. Kabine nach einem der Ansprüche 10 bis 12, wobei dem vordersten Block (2) in einer Blockreihe nach vorne in einer Richtung der Ausrichtung der Sitze (3) in der Reihe eine modifizierte hintere Schale (21e) vorausgeht, die laterale Stützen (4) ähnlich den lateralen Stützen eines Blocks (2) umfasst.

14. Fahrzeug für den Transport von Passagieren mit einer Kabine oder einem Teil einer Kabine nach einem der Ansprüche 10 bis 13, wobei die Fahrzeuge zu einer der Kategorien des Transports von Passagieren auf dem Land-, See- oder Luftweg gehören.

## Claims

1. Block (2) of two seats (3), in which each seat (3) can be converted individually, by a relative mouvement of elements (31, 32, 33, 36) of the seat, between a chair configuration in which an occupant of the seat is in a seated position and a bed configuration in which elements of the seat form a bed plane (35) and in which an occupant of the seat is stretched out substantially flat and substantially horizontally, in which block the two seats (3) are arranged side by side and oriented substantially in the same direction, wherein
• in the bed configuration, a longitudinal axis (34) of each of the seats (3) converges towards a convergence point situated in a vertical plane of symmetry of the block behind the said seats such that the longitudinal axes (34) of the two seats of the block are closer together in a head area (46) of the said block, **characterized in that** in which head area upper parts of the seat backs and/or of the head rests (36) of the two seats (3) are at least partially superposed in a vertical projection;
• when the two seats (3) are in the bed configuration, the bed plane (35) of one of the two seats is situated at a different height, relative to a reference surface corresponding to a cabin floor when the said block is installed in a cabin, from the bed plane of the other seat.

2. Two-seat block according to Claim 1, comprising, in a rear part substantially on each side of the head area (46) a lateral column (4) comprising a foot area (41), the said foot area being substantially along the longitudinal axis (34) of a seat (3), situated on the same side as the lateral column in question, of a similar block which would be placed behind the block (2) in question, in the same direction and substantially with the same axis, at a separating distance between the two blocks, termed the block pitch X, which is less than a desired length L0 of the bed of the said similar block behind.

3. Two-seat block according to Claim 2, in which the bed plane (35) in the bed configuration is vertically above the position of a seat cushion (31) of the seat in the chair configuration for at least one of the two seats (3).

4. Two-seat block according to Claim 2, in which the bed plane (35) in the bed configuration is vertically below the position of a seat cushion (31) of the seat in the chair configuration for at least one of the two seats (3).

5. Two-seat block according to Claim 2, in which, when the two seats (3) are in the bed configuration, the bed plane (35) of one of the two seats is vertically above the position of the seat cushions (31) of the seats in the chair configuration, and the bed plane (35) of the other seat is below the position of the seat cushions (3).

6. Two-seat block according to one of Claims 2 to 5, in which the foot areas (41) each comprise a rest surface (42) substantially in a horizontal plane, each foot area (41) being open at the rear and
situated at a height in the lateral column (4) such that the rest surfaces (42) are each level with a bed plane of which the said rest surfaces form part.

7. Two-seat block according to Claim 6, in which the bed plane (35) of a seat in the bed configuration is determined by the seat cushion (31) of the said seat, the seat back (32) and the head rest (36) of the said seat, a leg rest (33) of the said seat and/or one or more movable panels, the plane being extended by a rest surface (42) of a foot area (41) of a similar block which would be placed in front of the block (2) in question or of a modified rear shell (21e) having characteristics similar to the lateral columns (4) of a block, the said seat cushion, seat back, head rest, leg rest, movable panels and rest area being aligned substantially horizontally and in a same plane to form the bed.

8. Two-seat block according to Claim 7, in which the bed planes (35) of the two seats (3), when the said seats are both in the bed configuration, are vertically offset by a distance of between 350 and 500 mm.

9. Two-seat block according to one of Claims 2 to 8, in which the lateral columns (4) integrate technical equipment for the block and/or comfort or entertainment equipment which can be used by the occupants of the seats of a block situated behind the block (2) in question.

10. Cabin (1) or a part of a cabin for transporting passengers, having at least one line of at least two blocks (2) of two seats (3) in accordance with one of Claims 2 to 9, the said at least two blocks being arranged one behind the other in the same direction of orientation of the seats and separated, in a direction of the line of blocks, by a pitch X characterizing the distance between a reference point of each of the blocks (2), the said aeroplane cabin being **characterized in that**, for each of the two seats (3) of a block (2), following another block which precedes it in the direction of orientation of the seats (3), in the bed configuration a bed plane (35) of each seat (3) is extended by a foot area (41) situated in front of the said seat, inside the block preceding it, into a lateral column (4) situated on the same side of the block as the said seat in question

11. Cabin according to Claim 10, in which the seat (3) of a block (2) which has the bed plane situated vertically closest to the floor of the cabin (1) is situated on a side of the block (2) which is bordered by an aisle .

12. Cabin according to Claim 11, in which the pitch X of the blocks (2) of at least one line of blocks is modified to form, in the bed configuration, beds with different lengths L0 depending on the block (2) in question.

13. Cabin according to one of Claims 10 to 12, in which the frontmost block (2) in a line of blocks is preceded, at the front in a direction of orientation of the seats (3) of the said line, by a modified rear shell (21e) comprising lateral columns (4) similar to the lateral columns (4) of a block (2).

14. Vehicle for transporting passengers, comprising a cabin or part of a cabin according to one of Claims 10 to 13, the said vehicle belonging to one of the categories of transporting passengers by land, sea or air.
